(19) Europäisches Patentamt
European Patent Office
Office européen des brevets

(11) EP 4 783 283 A1

(12) **EUROPEAN PATENT APPLICATION**
published in accordance with Art. 153(4) EPC

(43) Date of publication:
**29.07.2026 Bulletin 2026/31**

(21) Application number: **23960685.8**

(22) Date of filing: **27.12.2023**

(51) International Patent Classification (IPC):
***H01M 10/0525** (2010.01)* ***H01M 4/133** (2010.01)*
***H01M 10/0567** (2010.01)* ***H01M 10/42** (2006.01)*

(52) Cooperative Patent Classification (CPC):
**H01M 4/133; H01M 10/0525; H01M 10/0567; H01M 10/42;** Y02E 60/10

(86) International application number:
**PCT/CN2023/142263**

(87) International publication number:
**WO 2025/118377 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.12.2023 CN 202311667572**

(71) Applicant: **Sunwoda Mobility Energy Technology Co., Ltd.**
**Shenzhen, Guangdong 518107 (CN)**

(72) Inventor: **LI, Lei**
**Shenzhen, Guangdong 518107 (CN)**

(74) Representative: **Elzaburu S.L.P.**
**Edificio Torre de Cristal**
**Paseo de la Castellana 259 C, planta 28**
**28046 Madrid (ES)**

(54) **SECONDARY BATTERY AND ELECTRICAL DEVICE**

(57) Provided are a secondary battery and an electrical device. The secondary battery includes a negative electrode sheet and an electrolyte solution. The negative electrode sheet includes a negative electrode current collector and a negative electrode active material layer disposed on the negative electrode current collector. The negative electrode active material layer includes a negative electrode active material. The electrolyte solution includes an additive. The secondary battery satisfies the condition: 0.81≤y≤3.41, where $y = \frac{MC}{W * S_{BET} / P} / T$, which can enable the secondary battery to have good cycling performance, low impedance, and a low gas production rate.

EP 4 783 283 A1

## Description

This application claims priority to Chinese Patent Application No. 202311667572.0, filed with the China National Intellectual Property Administration on December 05, 2023, and entitled "SECONDARY BATTERY AND ELECTRICAL DEVICE", the entire contents of which are incorporated herein by reference.

## TECHNICAL FIELD

The present application belongs to the field of battery technology, and specifically relates to a secondary battery and an electrical device.

## BACKGROUND

A secondary battery is mainly composed of a positive electrode, a negative electrode, an electrolyte solution, and a separator. The materials selected for the positive electrode, negative electrode, electrolyte solution, and separator, as well as their composition and battery configuration, have a significant impact on the electrochemical performance of the battery. Existing secondary batteries struggle to reasonably balance cycling performance, rate performance, and expansion performance.

## SUMMARY

Embodiments of the present application provide a secondary battery, aiming to achieve a good balance of excellent cycling performance, rate performance, and expansion performance. Another objective of the embodiments of the present application is to provide an electrical device.

In a first aspect, an embodiment of the present application provides a secondary battery, including: a negative electrode sheet and an electrolyte solution; the negative electrode sheet includes a negative electrode current collector and a negative electrode active material layer disposed on the negative electrode current collector, the negative electrode active material layer including a negative electrode active material; the electrolyte solution includes an additive; the secondary battery satisfies: $0.81 \leq y \leq 3.41$,

$$y = \frac{MC}{W * S_{BET} / P} / T;$$

wherein:

M is an electrolyte solution injection coefficient of the secondary battery, in g/Ah;
C is a mass percentage of the additive in the electrolyte solution, in %;
W is a surface density of the negative electrode active material layer in the secondary battery, in g/1540.25mm$^2$;
$S_{BET}$ is a specific surface area of the negative electrode active material, in m$^2$/g;
P is a compaction density of the negative electrode sheet, in g/cm$^3$;
T is a peeling force of the negative electrode active material layer, in N/m.

In some embodiments, $2.4 \leq M \leq 6.3$.
In some embodiments, $0.18 \leq W \leq 0.49$.
In some embodiments, $1 \leq S_{BET} \leq 2.6$.
In some embodiments, $1 \leq P \leq 2.5$.
In some embodiments, the electrolyte solution includes a lithium salt, and satisfies: $0.5 \leq C/D \leq 2.0$, where D is a molar concentration of the lithium salt in the electrolyte solution, in mol/L.
In some embodiments, $1.5 \leq C \leq 4$.
In some embodiments, $0.1 \leq D \leq 4$.
In some embodiments, $9 < T < 25$.
In some embodiments, the additive includes a cyclic carbonate additive.
In some embodiments, the cyclic carbonate additive includes at least one of vinylene carbonate, fluoroethylene carbonate, bisfluoroethylene carbonate, or vinylethylene carbonate.
In some embodiments, the lithium salt includes at least one of $LiPF_6$, $LiBF_4$, LiFSI, $LiPO_2F_2$, LiTFSI, LiDFOB, or LiBOB.
In some embodiments, the negative electrode active material includes at least one of artificial graphite or natural

graphite.

In some embodiments, the secondary battery includes a positive electrode sheet, the positive electrode sheet includes a positive electrode current collector and a positive electrode active material layer disposed on the positive electrode current collector, the positive electrode active material layer includes a positive electrode active material, and the positive electrode active material includes a lithium transition metal phosphide.

In a second aspect, an embodiment of the present application provides an electrical device, including the secondary battery described above, the secondary battery serving as a power supply for the electrical device.

Advantageous Effects

The secondary battery according to the embodiments of the present application includes a negative electrode sheet and an electrolyte solution; the negative electrode sheet includes a negative electrode current collector and a negative electrode active material layer disposed on the negative electrode current collector, the negative electrode active material layer including a negative electrode active material; the electrolyte solution includes an additive; the secondary battery satisfies: 0.81≤y≤3.41, wherein $y = \frac{MC}{W * S_{BET} / P} / T$. In the embodiments of the present application, the secondary battery can be enabled to have excellent cycling performance, rate performance, and a low expansion rate.

The electrical device of the embodiments of the present application may include all the technical features and advantageous effects of the aforementioned secondary battery, which are not repeated here.

**DESCRIPTION OF EMBODIMENTS**

The technical solutions in the embodiments of the present application will be described clearly and completely below with reference to the embodiments of the present application. Obviously, the described embodiments are only part of the embodiments of the present application, not all of the embodiments. Based on the embodiments in the present application, all other embodiments obtained by those skilled in the art without creative work are within the scope of protection of the present application. In addition, in the description of the present application, the term "including" means "including but not limited to". The terms "first", "second", "third", etc. are used only as labels, and no numerical requirements are imposed or order is established. Various embodiments of the present application may exist in the form of a range. It should be understood that the description in the form of a range is only for convenience and simplicity, and should not be construed as a rigid limit to the scope of the present application; therefore, it should be considered that the range description has specifically disclosed all possible sub-ranges and single values within the range. For example, it should be considered that a range from 1 to 6 as described has specifically disclosed sub-ranges, such as from 1 to 3, from 1 to 4, from 1 to 5, from 2 to 4, from 2 to 6, from 3 to 6, etc., as well as single numbers within said range, such as 1, 2, 3, 4, 5 and 6, which are applicable regardless of the range. Additionally, whenever a numerical range is indicated herein, it is meant to include any cited numeral (fraction or integer) within the indicated range.

An additive in an electrolyte solution of a secondary battery can form a structurally complete SEI film on the surface of a negative electrode material, which can improve the battery's cycling performance and gas production performance. The use of a specific additive in combination with a specific battery negative electrode material is crucial to the performance of a battery. An embodiment of the present application provides a secondary battery, including: a negative electrode sheet and an electrolyte solution; the negative electrode sheet includes a negative electrode current collector and a negative electrode active material layer disposed on the negative electrode current collector, and the negative electrode active material layer includes a negative electrode active material; the electrolyte solution includes an additive.

In the present application, the secondary battery satisfies: 0.81≤y≤3.41,where,

$$y = \frac{MC}{W * S_{BET} / P} / T;$$

where M is an electrolyte solution injection coefficient of the secondary battery, in g/Ah; C is a mass percentage of the additive in the electrolyte solution, in %; W is a surface density of the negative electrode active material layer in the secondary battery, in g/1540.25mm$^2$; $S_{BET}$ is a specific surface area of the negative electrode active material, in m$^2$/g; P is a compaction density of the negative electrode sheet, in g/cm$^3$; T is a peeling force of the negative electrode active material layer, in N/m. The applicant has found that a specific surface area of a negative active material of a secondary battery, a surface density of a negative active material layer, a compaction density of a negative electrode sheet, an electrolyte solution injection coefficient, and a peeling force of the negative active material layer can be controlled to meet a range defined in the present application. By adding an additive in an amount that matches the specific surface area of the

negative active material and the surface density of the negative active material layer, a dense protective film can be formed on the surface of the negative electrode, thereby reducing the consumption of the electrolyte solution during a battery cycle. At the same time, a protective film with a suitable thickness and a better composition can be formed, which can enable ions to have a better transmission rate, thereby improving the cycling performance and rate performance of the secondary battery, and making the battery have a lower expansion rate. In addition, the present application further specifies the peeling force of the negative active material layer to ensure that the negative electrode will not shed powder, thus preventing an impact on a battery capacity due to the peeling force of the negative active material layer.

In some embodiments, y is a value selected from any one of 0.81, 1.25, 1.35, 1.45, 1.55, 1.7, 1.9, 2.2, 2.4, 2.6, 2.8, 3.0, 3.2, 3.4, 3.41, or in a range between any two values thereof.

In some embodiments, the electrolyte solution injection coefficient M of the secondary battery satisfies: $2.4 \leq M \leq 6.3$.For instance, M is a value selected from any one of 2.4, 2.5, 2.6, 3, 3.2, 3.5, 4, 4.2, 4.5, 4.7, 5.1, 6.3, or in a range between any two values thereof. The electrolyte solution injection coefficient M of the secondary battery of the present application is controlled within said range, which is conducive to mitigating battery side reactions, lowering battery impedance, reducing battery gas production, inhibiting battery expansion, and improving battery cycling performance and rate performance.

In some embodiments, $0.18 \leq W \leq 0.49$, such as W($g/1540.25mm^2$) is a value selected from any one of 0.18, 0.185, 0.2, 0.25, 0.30, 0.35, 0.40, 0.45, 0.49, or in a range between any two values thereof. The surface density W of the negative electrode active material layer is within said range, which is conducive to lowering an internal resistance of a battery, enhancing a discharge capacity of the battery and improving its cycling performance.

In some embodiments, the surface density W of the negative electrode active material layer of the present application is obtained by the following method: cutting a negative electrode sheet into a round piece with an area of $1540.25mm^2$; weighing its weight as $m_1$ g; scraping off negative electrode active material layers on both sides of the negative electrode sheet; weighing a weight of a negative electrode current collector as $m_2$ g; and calculating the surface density W of the negative electrode active material layer according to $W= (m_1-m_2)g/1540.25mm^2$.

In some embodiments, the specific surface area ($m^2/g$) of the negative electrode active material satisfies: $1 \leq S_{BET} \leq 2.6$. For example, $S_{BET}$ is a value selected from any one of 1.0, 1.1, 1.2, 1.24, 1.3, 1.4, 1.45, 1.82, 2.0, 2.1, 2.2, 2.3, 2.4, 2.5, 2.6, or in a range between any two values thereof. The specific surface area of the negative electrode active material of the present application is within this range, which can improve the performance of the battery and reduce the occurrence of side reactions. The specific surface area of the negative electrode material can be obtained by the BET test method.

In some embodiments, the compaction density P ($g/cm^3$) of the negative electrode sheet satisfies: $1 \leq P \leq 2.5$.For example, P is a value selected from any one of 1.0, 1.1, 1.2, 1.3, 1.4, 1.5, 1.55, 1.6, 1.7, 1.8, 1.9, 2.0, 2.1, 2.2, 2.3, 2.4, 2.5, or in a range between any two values thereof. The compaction density of the present application is within this range, which can improve the compactness of the electrode sheet and ensure that the electrode sheet has suitable pores, so as to ensure the wettability of the negative electrode sheet and improve the battery performance.

In some embodiments, the compaction density of the negative electrode sheet of the present application is obtained by the following method: compaction density of negative electrode sheet = surface density of negative electrode sheet / (thickness of negative electrode sheet after rolling - thickness of negative electrode current collector), in units of $g/cm^3$. Alternatively, the compaction density is measured by a compaction density meter, and as for the test process, reference can be made to a national standard GB/T24533-2019.

In some embodiments, the electrolyte solution includes a lithium salt, an organic solvent, and an additive.

In some embodiments, $0.1 \leq C/D \leq 5.5$, where D is a molar concentration of the lithium salt in the electrolyte solution, in mol/L.

In some embodiments, $0.5 \leq C/D \leq 3.5$, where D is a molar concentration of the lithium salt in the electrolyte solution, in mol/L.

In some embodiments, $0.5 \leq C/D \leq 2.0$, where D is a molar concentration of the lithium salt in the electrolyte solution, in mol/L.

For example, C/D is a value selected from any one of 0.1, 0.5, 0.6, 0.7, 0.8, 0.9, 1.0, 1.1, 1.2, 1.3, 1.4, 1.5, 1.6, 1.7, 1.8, 1.9, 2.0, 3.0, 5.0 or in a range between any two values thereof. The C/D ratio of the present application is in a range of 0.5 to 2.0, so that the electrolyte solution has a better kinetic performance.

In some embodiments, a mass percentage C (%) of the additive in the electrolyte solution satisfies: $1.0 \leq C \leq 4$. For example, C is a value selected from any one of 1.0, 1.2, 1.5, 2.0, 2.5, 3.0, 3.5, 4.0 or in a range between any two values thereof. When the mass percentage of the additive in the present application is within this range, the negative electrode of the battery can form a structurally complete SEI film, effectively preventing the electrolyte solution from having side reactions on the surface of the negative electrode, thereby improving cycling performance and gas production performance of the battery, etc.

In some embodiments, the mass percentage C (%) of the additive in the electrolyte solution satisfies: $1.5 \leq C \leq 4$. When the mass percentage of the additive in the present application is within this range, the negative electrode of the battery can form a more complete SEI film in structure, which can further effectively prevent the electrolyte solution from

having side reactions on the surface of the negative electrode, thereby improving cycling performance and gas production performance of the battery, etc.

In some embodiments, a content of the additive in the electrolyte solution is measured by GC-MS (gas chromatography-mass spectrometry).

In some embodiments, $0.1 \le D \le 4$, such as D is a value selected from any one of 0.1, 0.5, 1.0, 1.5, 2.0, 2.5, 3.0, 3.5, 4.0 or in a range between any two values thereof. As such, the electrolyte solution will have a better ion transfer rate.

In some embodiments, a peeling force T (N/m) of the negative electrode active material layer satisfies: $9<T<25$. For example, T is a value selected from any one of 9, 10, 11, 12, 13, 14, 15, 16, 17, 18, 19, 20, 21, 22, 23, 24, 25 or in a range between any two values thereof. The T value of the present application is within this range, which can avoid the defect of battery capacity attenuation caused by the peeling force. The limitation of the peeling force of the present application ensures that the negative electrode active material layer improves the effectiveness of the battery under the premise of reasonable formula design.

In some embodiments, the peeling force of the negative electrode sheet of the present application can be measured by a tensile test analyzer, and the test method can be: fixing, by using a double-sided tape, a to-be-tested surface of a to-be-tested negative electrode sheet to a rigid bracket; attaching the other surface to a stainless steel plate; then, fixing the stainless steel plate and a current collector on two clamps of the device; adjusting a load and a stroke to zero before the test starts; performing the test; determining a maximum load value of the force at which the current collector is completely peeled off as a peeling force; repeating the test is repeated for 5 times; and obtaining an average value of the test results.

In some embodiments, the additive includes a cyclic carbonate additive.

In some embodiments, the cyclic carbonate additive includes at least one of vinylene carbonate, fluoroethylene carbonate, bisfluoroethylene carbonate, or vinylethylene carbonate.

In some embodiments, the lithium salt includes at least one of $LiPF_6$ (lithium hexafluorophosphate), $LiBF_4$ (lithium tetrafluoroborate), LiFSI (lithium bis(fluorosulfonyl)imide), $LiPO_2F_2$ (lithium difluorophosphate), LiTFSI (lithium bis(trifluoromethanesulfonyl)imide), LiDFOB (lithium difluorooxalatoborate), or LiBOB (lithium bis(oxalatoborate)).

In some embodiments, the lithium salt includes $LiPF_6$ (lithium hexafluorophosphate), and at least one of $LiBF_4$ (lithium tetrafluoroborate), LiFSI (lithium bis(fluorosulfonyl)imide), $LiPO_2F_2$ (lithium difluorophosphate), LiTFSI (lithium bis(trifluoromethanesulfonyl)imide), LiDFOB (lithium difluorooxalatoborate), or LiBOB (lithium bis(oxalatoborate)).

In some embodiments, the lithium salt includes $LiPF_6$ (lithium hexafluorophosphate), and at least one of LiFSI (lithium bis(fluorosulfonyl)imide) or LiTFSI (lithium bis(trifluoromethanesulfonyl)imide).

In some embodiments, a content of $LiPF_6$ accounts for 20% to 80% of a total amount of the lithium salt.

In some embodiments, the content of $LiPF_6$ accounts for 20% to 50% of the total amount of the lithium salt.

In some embodiments, the content of $LiPF_6$ accounts for 20% to 48% of the total amount of the lithium salt.

In some embodiments, the organic solvent in the electrolyte solution may include one or more of cyclic carbonates, chain carbonates, and chain carboxylates; the cyclic carbonates may be selected from one or more of propylene carbonate (PC) and ethylene carbonate (EC); the chain carbonates may be selected from one or more of dimethyl carbonate (DMC), ethyl methyl carbonate (EMC), diethyl carbonate (DEC), and dipropyl carbonate (DPC); the chain carboxylates may be selected from one or more of methyl acetate (MA), ethyl acetate (EA), propyl acetate (PA), methyl propionate (MP), ethyl propionate (EP), and propyl propionate (PP).

In some embodiments, the negative electrode active material includes at least one of artificial graphite or natural graphite. The negative electrode active material of the present application selects one or a mixture of two of the above materials, which can help reduce battery costs, improve battery safety and stability, and improve battery kinetic performance.

Positive electrode

In some embodiments, the secondary battery includes a positive electrode sheet, the positive electrode sheet includes a positive current collector and a positive active material layer disposed on the positive current collector, the positive active material layer includes a positive active material, and the positive active material includes a lithium transition metal phosphide. In some embodiments, the lithium transition metal phosphide includes $Li_aMn_x Fe_{1-x}PO_4$, where $0.9 \le a \le 1.1$, $0 \le x < 1$. Specifically, the positive active material may be lithium iron phosphate or lithium manganese iron phosphate.

In some embodiments, the positive electrode sheet further includes a conductive agent and a binder. The types and contents of the conductive agent and the binder are not specifically limited and can be selected according to actual needs. In some embodiments, the conductive agent may include conductive carbon black, carbon nanotubes, graphene, etc., and the binder may include polyvinylidene fluoride.

In some embodiments, the preparation of the positive electrode sheet includes: dispersing the above-mentioned positive electrode active material, a conductive agent, and a binder in N-methylpyrrolidone (NMP) in a certain ratio; coating

the resulting slurry onto an aluminum foil, performing drying, cold-pressing, and slitting to obtain the positive electrode sheet.

Separator

In some embodiments, the type of the separator is not particularly limited and can be selected according to actual needs. The separator can be a polypropylene film, a polyethylene film, a polyvinylidene fluoride, a spandex film, an aramid film, or a coating-modified multilayer composite film.

In some embodiments, the preparation of a secondary battery includes: stacking a positive electrode sheet, a separator, and a negative electrode sheet in sequence to make the separator located between the positive electrode sheet and negative electrode sheet for separation; winding them to form a square bare cell; placing the cell into a battery casing; then baking it at 65-95°C to remove moisture; injecting an electrolyte solution; sealing the casing; and performing standing, hot and cold pressing, forming, fixing, and capacity grading, to obtain a secondary battery.

In some embodiments, the secondary battery includes a lithium-ion battery. The above only takes a soft-pack lithium-ion battery as an example. The present application is not limited to the applications of soft-pack batteries, but also includes the applications of common lithium-ion battery forms such as aluminum shell batteries and cylindrical batteries.

Electrical device

In some embodiments, the present application provides an electrical device, which includes the above-mentioned secondary battery. The electrical device can be used for but is not limited to backup power supplies, motors, electric vehicles, electric motorcycles, power-assisted bicycles, bicycles, power tools, large household batteries, etc.

In the present application, numerous tests have been carried out, and some of the test results are now provided as references to further describe the present invention in detail, and the following is a detailed description with reference to specific embodiments. It should be understood that these embodiments are only used to illustrate the present invention and are not used to limit the scope of the present invention.

Example 1:

A positive electrode active material $LiFePO_4$, a conductive agent SP, and a binder PVDF are mixed in a mass ratio of 96:2:2, and NMP is added, then they were stirred under a vacuum condition until the system is uniform, so as to obtain a positive electrode slurry; then the positive electrode slurry is evenly coated on one side of a positive electrode current collector aluminum foil; and then the aluminum foil is dried in an oven and then subjected to cold pressing to obtain a positive electrode sheet. A compaction density of the positive electrode sheet is 2.45g/cm$^3$.

A negative electrode active material graphite, a conductive agent SP, a thickener CMC, and a binder SBR are mixed in a mass ratio of 96.2:1.2:1.2:1.4, deionized water is added as a solvent, and then they are stirred under a vacuum condition until the system becomes uniform, so as to obtain a negative electrode slurry. The negative electrode slurry is evenly coated on one side of a copper foil current collector, and then the copper foil current collector is dried in an oven and then subjected to cold pressing to obtain a negative electrode sheet. A compaction density P g/cm$^3$ of the negative electrode sheet is 1.55g/cm$^3$; a $S_{BET}$ m$^2$/g of the negative electrode active material is 1.60 m$^2$/g; a surface density W of the negative electrode active material layer is 0.3g/1540.25mm$^2$; and a peeling force of the negative electrode active material layer is 15.00N/m. The compaction density and surface density of the negative electrode sheet can be controlled by controlling a coating weight of the negative electrode sheet, a rolling pressure and a rolling time during the cold pressing process. A specific surface area of the negative electrode active material can be regulated by the particle size distribution of the negative electrode active material, morphology or type of the negative electrode active material. The peeling force of the negative electrode active material layer can be controlled by controlling a proportion of the binder in the slurry, the morphology of the negative electrode active material and the rolling pressure during the cold pressing process.

Electrolyte solution: ethyl methyl carbonate and dimethyl carbonate are mixed in a mass ratio of 1:1; then, lithium hexafluorophosphate is added; after they are mixed evenly, an additive vinylene carbonate is added. Based on a mass of the electrolyte solution, a concentration of lithium hexafluorophosphate is 2 mol/L, and a mass percentage of the additive vinylene carbonate is 1.6%.

The positive electrode sheet, a separator (PP separator with a thick of 16 μm), and the negative electrode sheet are stacked in sequence to make the separator located between the positive electrode sheet and the negative electrode sheet to play an isolating role, and then they are wound to form a bare battery cell.

The bare battery cell is encapsulated in an aluminum-plastic film, and after drying, the prepared electrolyte solution is injected, and an injection coefficient of the electrolyte solution is controlled to be 3.8g/Ah (injection coefficient = injection amount of electrolyte solution/design capacity of battery). Then, after vacuum packaging, standing, forming, hot pressing and other processes, a lithium-ion secondary battery is obtained, and the design capacity of the secondary

battery is 3Ah.

Examples 2 to 4: The preparation methods are the same as that of Example 1, difference is that the content of the additive is adjusted to make the mass percentage of the additive in the electrolyte solution adjusted, as shown in Table 1 for details.

Example 5 to Example 9: The preparation methods are the same as that of Example 2, difference is that the injection amount of the electrolyte solution is adjusted to make the injection coefficient of the secondary battery adjusted, as shown in Table 1 for details.

Examples 10 to 14: The preparation methods are the same as that of Example 2, difference is that negative electrode active materials of different shapes are used to make the specific surface area of the negative electrode material adjusted, and the concentration of lithium hexafluorophosphate in the electrolyte solution is adjusted, as shown in Table 1 for details.

Examples 15 to 18: The preparation methods are the same as that of Example 2, difference is that the rolling pressure of the negative electrode sheet and the mass ratio of the binder to the negative electrode active material in the negative electrode slurry are adjust to make the compaction density of the negative electrode active material adjusted, as shown in Table 1 for details.

Examples 19 to 22: The preparation methods are the same as that of Example 2, difference is that the coating weight of the negative electrode slurry and the rolling pressure are adjusted to make the surface density of the negative electrode active material layer adjusted, as shown in Table 1 for details.

Examples 23-24: The preparation methods are the same as that of Example 2, difference is that the mass ratio of the binder to the negative electrode active material in the negative electrode slurry is adjusted to make the peeling force of the negative electrode active material layer adjusted, as shown in Table 1 for details.

Examples 25 to 28: The preparation methods are the same as that of Example 2, difference is that the lithium hexafluorophosphate in the electrolyte solution is adjusted to a mixed lithium salt of lithium hexafluorophosphate and lithium bis(fluorosulfonyl)imide LiFSI (where mass ratios of lithium hexafluorophosphate and lithium bis(fluorosulfonyl) imide LiFSI in the mixed lithium salts in Examples 25 to 28 are 8:2, 5:5, 2:8, and 1:9, respectively).

Comparative Examples 1-2: The preparation methods are the same as that of Example 1, difference is that the content of the additive and the amount of the injected electrolyte solution are adjusted, as shown in Table 1 for details.

Performance testing method:

Volume expansion rate test: A battery is stored in a state of 100% SOC at 60°C, and its volume is measured every 6 days; after measurement, it is charged to 3.65V at 0.1C and continued to be stored. The above steps are repeated for 30 days, and the battery expansion rate is tested. The battery expansion rate = (Vn-V0)/V0*100%, where V0 is a volume of the battery before the test, in $cm^3$, and Vn is a volume of the battery after 30 days of storage, in $cm^3$.

Battery DC impedance (DCR): At 25°C, a lithium-ion secondary battery is left to stand for 5 minutes, charged to 3.65V at a constant current rate of 1C, and then charged at a constant voltage until its current is less than or equal to 0.05C, at this time, the battery has a state of charge (SOC) of 100%. Then it is left to stand for 5 minutes, and then discharged at a constant current rate of 1C to adjust the state of charge (SOC) of the lithium-ion secondary battery to 50%. Then, the lithium-ion secondary battery with the SOC of 50% is left to stand for another 10 minutes, and discharged at a constant current rate of 4C for 30 seconds. A voltage U1 at the last second of the standing, a voltage U2 at the last second of the 4C constant current discharge, and a current I used for the 4C constant current discharge are recorded. Battery DC impedance = $(U_2-U_1)/I$, in mΩ.

Cycling performance: A cycle capacity retention rate is measured. Under 25±5°C environment, a battery is subjected to a room temperature cycle test: the battery is subjected to 0.5C constant current charging to 3.65V, then 3.65V constant voltage charging to a cut-off current of 0.05C, and then constant current discharging to 2.8V at 1C, and the number of cycles at an end point is recorded as 500, and the cycle capacity retention rate of the battery after 500 cycles is calculated.

Table 1 Battery parameters of Examples 1 to 24 and Comparative Examples 1 to 2 of the present application

| | y | M (g/Ah) | C (%) | W (g/1540.25 $mm^2$) | $S_{BET}$ ($m^2/g$) | P ($g/cm^3$) | D (mol/L) | T (N/m) | C/D |
|---|---|---|---|---|---|---|---|---|---|
| Example 1 | 1.31 | 3.80 | 1.60 | 0.30 | 1.60 | 1.55 | 2.00 | 15 | 0.80 |
| Example 2 | 2.05 | 3.80 | 2.50 | 0.30 | 1.60 | 1.55 | 2.00 | 15 | 1.25 |
| Example 3 | 2.70 | 3.80 | 3.30 | 0.30 | 1.60 | 1.55 | 2.00 | 15 | 1.65 |
| Example 4 | 3.27 | 3.80 | 4.00 | 0.30 | 1.60 | 1.55 | 2.00 | 15 | 2.00 |

(continued)

| | y | M (g/Ah) | C (%) | W (g/1540.25 $mm^2$) | $S_{BET}$ ($m^2/g$) | P ($g/cm^3$) | D (mol/L) | T (N/m) | C/D |
|---|---|---|---|---|---|---|---|---|---|
| Example 5 | 1.29 | 2.40 | 2.50 | 0.30 | 1.60 | 1.55 | 2.00 | 15 | 1.25 |
| Example 6 | 1.88 | 3.50 | 2.50 | 0.30 | 1.60 | 1.55 | 2.00 | 15 | 1.25 |
| Example 7 | 2.96 | 5.50 | 2.50 | 0.30 | 1.60 | 1.55 | 2.00 | 15 | 1.25 |
| Example 8 | 2.15 | 4.00 | 2.50 | 0.30 | 1.60 | 1.55 | 2.00 | 15 | 1.25 |
| Example 9 | 3.39 | 6.30 | 2.50 | 0.30 | 1.60 | 1.55 | 2.00 | 15 | 1.25 |
| Example 10 | 2.64 | 3.80 | 2.50 | 0.30 | 1.24 | 1.55 | 1.00 | 15 | 2.50 |
| Example 11 | 1.80 | 3.80 | 2.50 | 0.30 | 1.82 | 1.55 | 2.00 | 15 | 1.25 |
| Example 12 | 1.64 | 3.80 | 2.50 | 0.30 | 2.00 | 1.55 | 3.00 | 15 | 0.83 |
| Example 13 | 3.37 | 3.80 | 2.50 | 0.30 | 0.97 | 1.55 | 4.00 | 15 | 0.63 |
| Example 14 | 1.26 | 3.80 | 2.50 | 0.30 | 2.60 | 1.55 | 0.50 | 15 | 5.00 |
| Example 15 | 1.32 | 3.80 | 2.50 | 0.30 | 1.60 | 1.00 | 2.00 | 15 | 1.25 |
| Example 16 | 3.30 | 3.80 | 2.50 | 0.30 | 1.60 | 2.50 | 2.00 | 15 | 1.25 |
| Example 17 | 1.25 | 3.80 | 2.50 | 0.30 | 1.60 | 0.95 | 2.00 | 15 | 1.25 |
| Example 18 | 3.36 | 3.80 | 2.50 | 0.30 | 1.60 | 2.55 | 2.00 | 15 | 1.25 |
| Example 19 | 2.79 | 3.80 | 2.50 | 0.22 | 1.60 | 1.55 | 2.00 | 15 | 1.25 |
| Example 20 | 3.41 | 3.80 | 2.50 | 0.18 | 1.60 | 1.55 | 2.00 | 15 | 1.25 |
| Example 21 | 1.25 | 3.80 | 2.50 | 0.49 | 1.60 | 1.55 | 2.00 | 15 | 1.25 |
| Example 22 | 1.18 | 3.80 | 2.50 | 0.52 | 1.60 | 1.55 | 2.00 | 15 | 1.25 |
| Example 23 | 3.41 | 3.80 | 2.50 | 0.30 | 1.60 | 1.55 | 2.00 | 9 | 1.25 |
| Example 24 | 1.23 | 3.80 | 2.50 | 0.30 | 1.60 | 1.55 | 2.00 | 25 | 1.25 |
| Comparative Example 1 | 4.34 | 4.80 | 4.20 | 0.30 | 1.60 | 1.55 | 2.00 | 15 | 2.10 |
| Comparative Example 2 | 0.41 | 3.80 | 0.50 | 0.30 | 1.60 | 1.55 | 2.00 | 15 | 0.25 |

Table 2 Battery performance test results of Examples 1 to 28 and Comparative Examples 1 to 2

| | Capacity Retention Rate of battery after 500 cycles (%) | Impedance of electrode sheet (mΩ) | Whether Lithium precipitation Occurs | Expansion Rate after storage for 30 days at 60°C (%) |
|---|---|---|---|---|
| Example 1 | 90.0 | 32.5 | Yes | 5.2 |
| Example 2 | 94.5 | 23.7 | No | 4.8 |
| Example 3 | 94.2 | 23.5 | No | 6.1 |
| Example 4 | 91.0 | 25.0 | Yes | 6.3 |
| Example 5 | 93.0 | 21.1 | No | 5.1 |
| Example 6 | 94.6 | 20.4 | No | 5.3 |
| Example 7 | 89.2 | 22.6 | No | 8.2 |
| Example 8 | 93.3 | 22.3 | No | 5.2 |
| Example 9 | 86.1 | 24.1 | Yes | 20.0 |
| Example 10 | 90.3 | 22.1 | No | 5.2 |

(continued)

| | Capacity Retention Rate of battery after 500 cycles (%) | Impedance of electrode sheet (mΩ) | Whether Lithium precipitation Occurs | Expansion Rate after storage for 30 days at 60°C (%) |
|---|---|---|---|---|
| Example 11 | 94.6 | 24.5 | No | 5.1 |
| Example 12 | 92.8 | 26.0 | No | 5.5 |
| Example 13 | 89.3 | 23.5 | Yes | 12.0 |
| Example 14 | 85.1 | 25.0 | Yes | 14.0 |
| Example 15 | 94.8 | 19.0 | No | 5.5 |
| Example 16 | 92.8 | 30.8 | No | 5.7 |
| Example 17 | 86.1 | 23.0 | No | 14.3 |
| Example 18 | 91.7 | 28.0 | Yes | 14.0 |
| Example 19 | 82.4 | 27.0 | No | 15.2 |
| Example 20 | 83.8 | 28.0 | No | 15.3 |
| Example 21 | 92.1 | 29.2 | No | 5.5 |
| Example 22 | 90.9 | 34.0 | Yes | 27.1 |
| Example 23 | 78.0 | 39.0 | Yes | 29.0 |
| Example 24 | 81.0 | 42.0 | Yes | 31.0 |
| Example 25 | 94.5 | 20.0 | No | 3.0 |
| Example 26 | 93.2 | 24.0 | No | 4.1 |
| Example 27 | 88.0 | 26.0 | No | 4.5 |
| Example 28 | 83.0 | 34.0 | Yes | 10.1 |
| Comparative Example 1 | 63.2 | 38.6 | Yes | 21.0 |
| Comparative Example 2 | 69.7 | 37.3 | Yes | 18.7 |

As evidenced by the results in Table 2, in the present application when a specific surface area of a negative electrode material of a secondary battery, a surface density of the negative electrode material, a compaction density of a negative electrode sheet, an injection coefficient of an electrolyte solution and a peeling force of a negative electrode active material layer are comprehensively considered, it is found that when they satisfy the range defined by the present application, cycling performance of the secondary battery can be improved. Further, when the specific surface area of the negative electrode material, the surface density of the negative electrode material, the compaction density of the negative electrode sheet, the injection coefficient of the electrolyte solution and the peeling force of the negative electrode active material layer of the present application meet the range defined in the present application, the cycling performance, impedance and gas production performance of the secondary battery can be improved.

In the above embodiments, the description of each embodiment has its own emphasis. For parts that are not described in detail in a certain embodiment, reference can be made to the relevant descriptions of other embodiments.

The above is a detailed introduction to a secondary battery and electrical device provided by the embodiments of the present application, and specific examples are used to illustrate the principles and implementations of the present application. The description of the above embodiments is only used to help understand the technical solution and its core idea of the present application. Those skilled in the art should understand that they can still modify the technical solutions recorded in the aforementioned embodiments, or substitute some of the technical features therein with equivalents; and these modifications or substitutions do not make the essence of the corresponding technical solution deviate from the scope of the technical solution of the embodiments of the present application.

## Claims

**1.** A secondary battery, comprising a negative electrode sheet and an electrolyte solution;

the negative electrode sheet comprises a negative electrode current collector and a negative electrode active material layer disposed on the negative electrode current collector, the negative electrode active material layer comprising a negative electrode active material; the electrolyte solution comprises an additive;

the secondary battery satisfies: $0.81 \le y \le 3.41$, $y = \frac{MC}{W * S_{BET} / P} / T$ ;

wherein:

M is an electrolyte solution injection coefficient of the secondary battery, in g/Ah;
C is a mass percentage of the additive in the electrolyte solution, in %;
W is a surface density of the negative electrode active material layer in the secondary battery, in g/1540.25 $mm^2$;
$S_{BET}$ is a specific surface area of the negative electrode active material, in $m^2/g$;
P is a compaction density of the negative electrode sheet, in $g/cm^3$;
T is a peeling force of the negative electrode active material layer, in N/m.

**2.** The secondary battery according to claim 1, wherein $2.4 \le M \le 6.3$.

**3.** The secondary battery according to claim 1, wherein $0.18 \le W \le 0.49$.

**4.** The secondary battery according to claim 1, wherein $1 \le S_{BET} \le 2.6$.

**5.** The secondary battery according to claim 1 or claim 4, wherein $1 \le P \le 2.5$.

**6.** The secondary battery according to claim 1, wherein the electrolyte solution comprises a lithium salt, and satisfies: $0.5 \le C/D \le 2.0$, wherein D is a molar concentration of the lithium salt in the electrolyte solution, in mol/L.

**7.** The secondary battery according to claim 6, wherein $1.5 \le C \le 4$.

**8.** The secondary battery according to claim 6 or claim 7, wherein $0.1 \le D \le 4$.

**9.** The secondary battery according to claim 1, wherein $9 < T < 25$.

**10.** The secondary battery according to claim 1, wherein the additive comprises a cyclic carbonate additive; and/or, the cyclic carbonate additive comprises at least one of vinylene carbonate, fluoroethylene carbonate, bisfluoroethylene carbonate, or vinylethylene carbonate.

**11.** The secondary battery according to claim 6, wherein the lithium salt comprises at least one of $LiPF_6$, $LiBF_4$, LiFSI, $LiPO_2F_2$, LiTFSI, LiDFOB, or LiBOB.

**12.** The secondary battery according to claim 1, comprising a positive electrode sheet, the positive electrode sheet comprising a positive electrode current collector and a positive electrode active material layer disposed on the positive electrode current collector, the positive electrode active material layer comprising a positive electrode active material, and the positive electrode active material comprising a lithium transition metal phosphide.

**13.** An electrical device, comprising the secondary battery according to any one of claims 1 to 12.

**INTERNATIONAL SEARCH REPORT**

International application No.
**PCT/CN2023/142263**

**A. CLASSIFICATION OF SUBJECT MATTER**

H01M 10/0525(2010.01)i; H01M4/133(2010.01)i; H01M10/0567(2010.01)i; H01M10/42(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, DWPI, CJFD: 注液系数, 面密度, 比表面积, 压实密度, 剥离, 负极, 循环, 阻抗, 产气, 倍率, 膨胀, 副反应, 内阻, 比容, negative pole, cathode pole, cycle, impedance, gas, liquid injection coefficient, areal density, surface area, compacted density, peel+

**C. DOCUMENTS CONSIDERED TO BE RELEVANT**

| Category* | Citation of document, with indication, where appropriate, of the relevant passages | Relevant to claim No. |
|---|---|---|
| A | CN 116914252 A (SUNWODA POWER TECHNOLOGY CO., LTD.) 20 October 2023 (2023-10-20) description, paragraphs [0005]-[0023] | 1-13 |
| A | CN 116190756 A (SUNWODA ELECTRIC VEHICLE BATTERY CO., LTD.) 30 May 2023 (2023-05-30) entire document | 1-13 |
| A | CN 116470143 A (NIO BATTERY TECHNOLOGY (ANHUI) CO., LTD.) 21 July 2023 (2023-07-21) entire document | 1-13 |
| A | CN 116802871 A (NINGDE CONTEMPORARY AMPEREX TECHNOLOGY CO., LTD.) 22 September 2023 (2023-09-22) entire document | 1-13 |
| A | WO 2023045948 A1 (SHENZHEN CAPCHEM TECHNOLOGY CO., LTD.) 30 March 2023 (2023-03-30) entire document | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 July 2024** | **22 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/142263**

**C. DOCUMENTS CONSIDERED TO BE RELEVANT**

| Category* | Citation of document, with indication, where appropriate, of the relevant passages | Relevant to claim No. |
|---|---|---|
| A | WO 2023122966 A1 (NINGDE AMPEREX TECHNOLOGY LTD.) 06 July 2023 (2023-07-06) entire document | 1-13 |

Form PCT/ISA/210 (second sheet) (July 2022)

**INTERNATIONAL SEARCH REPORT**
**Information on patent family members**

International application No.
**PCT/CN2023/142263**

| Patent document cited in search report | | | Publication date (day/month/year) | Patent family member(s) | | | Publication date (day/month/year) |
|---|---|---|---|---|---|---|---|
| CN | 116914252 | A | 20 October 2023 | None | | | |
| CN | 116190756 | A | 30 May 2023 | None | | | |
| CN | 116470143 | A | 21 July 2023 | CN | 116470143 | B | 05 September 2023 |
| CN | 116802871 | A | 22 September 2023 | None | | | |
| WO | 2023045948 | A1 | 30 March 2023 | CN | 114024028 | A | 08 February 2022 |
| WO | 2023122966 | A1 | 06 July 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311667572


### Non-patent literature cited in the description


- *GB/T24533-2019*